Europäisches Patentamt

European Patent Office    (11) Publication number:    **0 063 184**

Office européen des brevets    **B1**

(12)    **EUROPEAN PATENT SPECIFICATION**

(45) Date of publication of patent specification: **16.04.86**    (51) Int. Cl.⁴: **A 01 K 1/062, A 01 K 1/08**

(21) Application number: **81200587.4**

(22) Date of filing: **27.05.81**

(54) **Feeding fence for cattle stables.**

(30) Priority: **15.04.81 NL 8101854**

(43) Date of publication of application:
**27.10.82 Bulletin 82/43**

(45) Publication of the grant of the patent:
**16.04.86 Bulletin 86/16**

(84) Designated Contracting States:
**BE DE FR GB LU NL**

(56) References cited:
**DE-A-1 607 248**
**DE-C- 709 956**
**GB-A- 2 806**

(73) Proprietor: **De Erven G.de Boer B.V.**
**Jupiterweg 17**
**NL-8938 AD Leeuwarden (NL)**

(72) Inventor: **Wildschut, Gerben**
**Fedde Schurerwei 20**
**NL-8915 DM Leeuwarden (NL)**
Inventor: **Teernstra, Pieter**
**Roggemolestege 3**
**NL-8711 EA Workum (NL)**

(74) Representative: **'t Jong, Bastiaan Jacobus et al**
**OCTROOIBUREAU ARNOLD & SIEDSMA P.O.**
**Box 18558**
**NL-2502 EN 's-Gravenhage (NL)**

Courier Press, Leamington Spa, England.

## Description

The invention relates to a feeding fence for cattle stables, comprising at least one horizontal profile girder and a number of passage openings each adapted to allow the head of an animal using said opening to pass through said fence, each passage opening comprising a catching apparatus which is operated by the cattle, which catching apparatus each comprise at least one bar or spike pivoting on a fixed part of the fence and being movable parallel to the plane of the fence to a catching position behind the head of the animal, said bar or spike being lockable in the catching position by a locking element, common unlocking means associated with each locking element being mounted to said horizontal girder and comprising an operating rod extending along the horizontal girder and being guided movable relative thereto between a rest position and an activated position in which the locking element is moved in a non-operative position.

The applicant has declared that the claimed priority date of April 15, 1981, does not relate to the matter disclosed in the earlier Dutch patent application 8 000 505 of applicant, and further that he has voluntarily limited the scope of the present application for the Netherlands jurisdiction to the matter not disclosed in said earlier Dutch patent application.

A feeding fence of this type is known for DE—A—1 607 248. The horizontal upper girder in this known fence comprises an angle iron one leg of which extends horizontally and the other leg extending vertically upwards. The locking elements in the form of pivotable pawls are mounted to the outside of the upstanding leg. The operating rod is slidably mounted at the opposite side of the upstanding leg. To the operating rod wedges are secured, which can lift the pawls, when the operating rod is moved longitudinally.

With this known feeding fence, the locking device is exposed to the animals which therefore can manipulate the locking device. Furthermore, it comprises projecting parts on which the neck collars of the animals and the clothing and body parts of the person tending the animals can become hooked.

The object of the invention is to provide a feeding fence of the type set forth above, constructed in such a way that it does not exhibit the disavantages mentioned above and can be manufactured economically.

With a feeding fence according to the invention this is achieved in that the horizontal profile girder is a hollow profile girder substantially closed circumferentially, at least at the sides facing away from the pivoting bars or spikes, that the locking element and the operating rod are mounted inside the horizontal profile girder, said girder having in the area of each locking element, at the side facing the pivoting bar or spike an engagement opening, through which the locking element and the bar or spike can engage. The locking device is enclosed by the hollow profile girder and therefore cannot be reached by the animals. The outer surface of the girder is smooth, so that the danger of becoming hooked is eliminated.

An advantageous embodiment of the invention is obtained when the horizontal profile girder has a U- or C-shaped cross-section and in that the engagement opening is formed by part of the opening extending lengthwise of the girder. With the manufacturing of the feeding fence, no distinct machining operation is necessary, for providing the engagement openings.

From DE—A—709 956 a fence for securing animals is known. This fence is not a feeding fence of the kind the invention relates to. It does comprise a horizontal profile girder, and pivotable spikes, which can be locked in a securing position by means of locking elements. In case of an emergency, the locking elements can all be released at the same time by means of an operating rod extending inside the horizontal profile girder, provided in the form of a tube. The locking elements are mounted outside the girder on a short piece of tube, extending downward from the girder. The end of the pivotable spike closes against this piece of tube.

Further characteristics and advantages of the present invention will follow from the following description of examples of embodiments, with reference to the accompanying figures.

Fig. 1 shows a side view of a feeding fence according to the invention in the open position.

Fig. 2 shows the feeding fence according to fig. 1 in the closed or catching position.

Fig. 3 shows a detail of the upper side of a feeding place with catching apparatus according to fig. 1 on a larger scale.

Fig. 4 is a side view in partial cross section over the line IV—IV in fig. 3.

Fig. 5 is a side view in cross section over the line V—V in fig. 3.

Fig. 6 is a detail of the upper part of the fence with a feeding place and the catching apparatus in the closed position on a larger scale.

Fig. 7 is a side view in cross section over the line VII—VII in fig. 6.

Fig. 8 is a side view in cross section over the line VIII—VIII in fig. 6.

Fig. 9 shows a perspective view of a locking pawl in the retracted or unlocking position on an enlarged scale.

Fig. 10 shows a similar view as fig. 9, in which the locking pawl is, however, in the extended or locking position.

Fig. 11 shows a detail of fig. 2 according to another preferential embodiment, in which the upper side of a feeding place with catching apparatus is shown in the closed and locked position, on an enlarged scale.

Fig. 12 shows the same part of the feeding fence as fig. 11, but now in the opened and unlocked position.

Fig. 13 shows a side view of the feeding fence according to fig. 11 and 12, in the open and unlocked position, whereas the locked position is undicated with chain lines.

Fig. 14 shows a cross section over the upper profile girder over the line XIV—XIV in fig. 3, on an enlarged scale.

Fig. 15 shows a cross section over the upper profile girder over the line XV—XV in fig. 12, on the same scale as fig. 14.

Fig. 16 and 17 are cross sections over the lines XVI—XVI and XVII—XVII respectively in fig. 11.

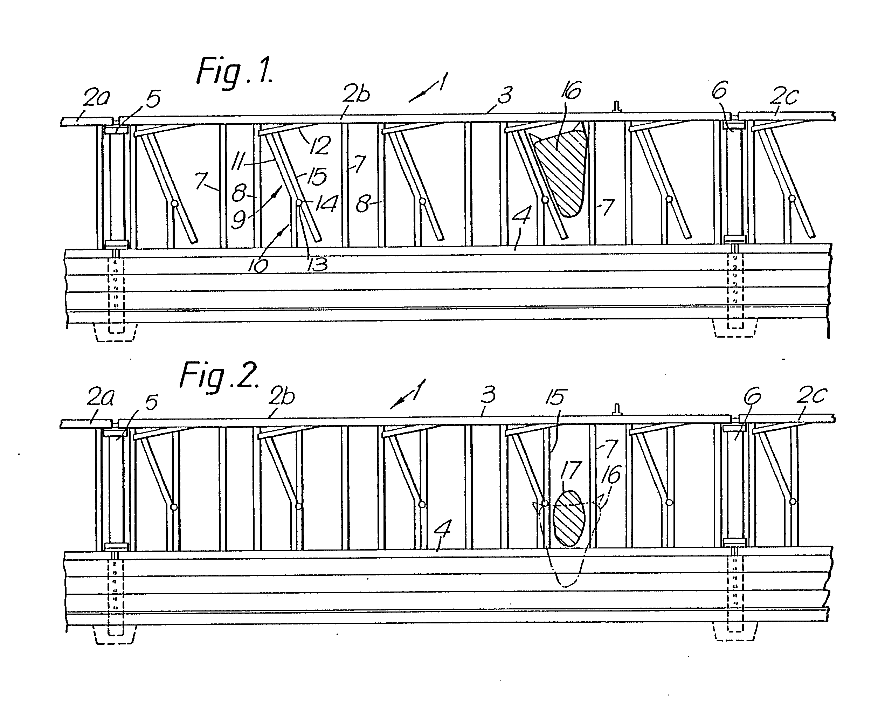

According to the drawing and in particular fig. 1 and 2 the feeding fence according to the invention is made up from a number of mutually coupled, fence elements, 2a, 2b, 2c and so forth according to the desired length of the fence. For the sake of simplicity here only the fence element 2b will be described, that comprises five feeding places with corresponding catching aparatuses.

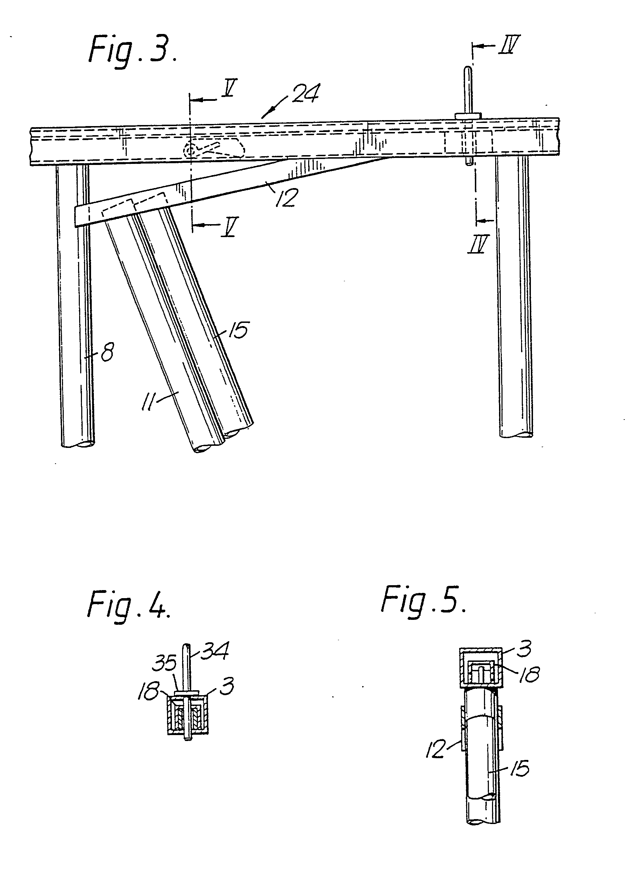

Each fence element 2 is built up from an upper and a lower horizontal profile girder 3 and 4 respectively, for instance with a square or round or channel shaped cross section, which have been fastened between the vertical, fixed columns 5 and 6. The profile girders 3 and 4 are substantially mutually parallel, lie in one substantially vertical plane and are connected by a number of fixed spikes 7, 8 which extend substantially vertical and are fastened at the one end to the upper girder 3 and the other end at the lower girder 4. Furthermore another type of fixed spike 9 is present, which is bent and is formed by a lower, substantially vertical part 10, that is fastened to the lower profile girder 4, and extends over about one third of the total height of the fence. On the lower, substantial vertical spike part 10 connects with a bend an upper spike part 11, of which the upper end is fastened to a support 12 which extends with an acute angle with the vertical. The support 12 is at the one end connected near the upper end of the fixed, vertical spike 8, and at the other end to the lower side of the horizontal, upper girder 3, vertically at some distance on the right side of the (imaginary) extension of the substantially vertical spike part 10. The fastening of the oblique spike part 11 to the sloping support 12 takes place at a short distance from the connection of the support 12 with the spike 8. Near the bend in the fixed, bent spike 9 a two armed bracket 13 is fastened, whereas between the arms of this bracket a pivot shaft 14 extends which extends through a pivoting bar or spike 15. This spike 15 can pivot between the one end position, shown in fig. 1 and 5, in which a substantially V-shaped passage opening is liberated for the schematically indicated head 16 of a cow, and another end position or catching position, viz. fig. 2 and the chain line in fig. 5, in which the neck 17 of the cow is locked up between the fixed spike 7 and the pivoting spike 15. In this feeding position the cow can reach with its head, shown in fig. 2 with chain lines, over the lower partition 35 the (not shown) fodder lying on the floor 36.

In figs. 3 through 10 the details are shown of the locking device according to the first main preferential embodiment of the invention. In the upper horizontal profile girder 3 for the locking mechanism an operating rod 18 is arranged which has a channel shaped cross section. This channel profile 18 rests with the lower side of the substantially vertical flanges 19 and 20 on the inside of the horizontal lower leg of the square profile girder 3 and is slidable thereover. Between the flanges 19 and 20, which have recesses starting from the lower side, of which only the recess 21 is visible, the stub shafts 22 and 23 are pivoted of the generally with 24 indicated locking pawls.

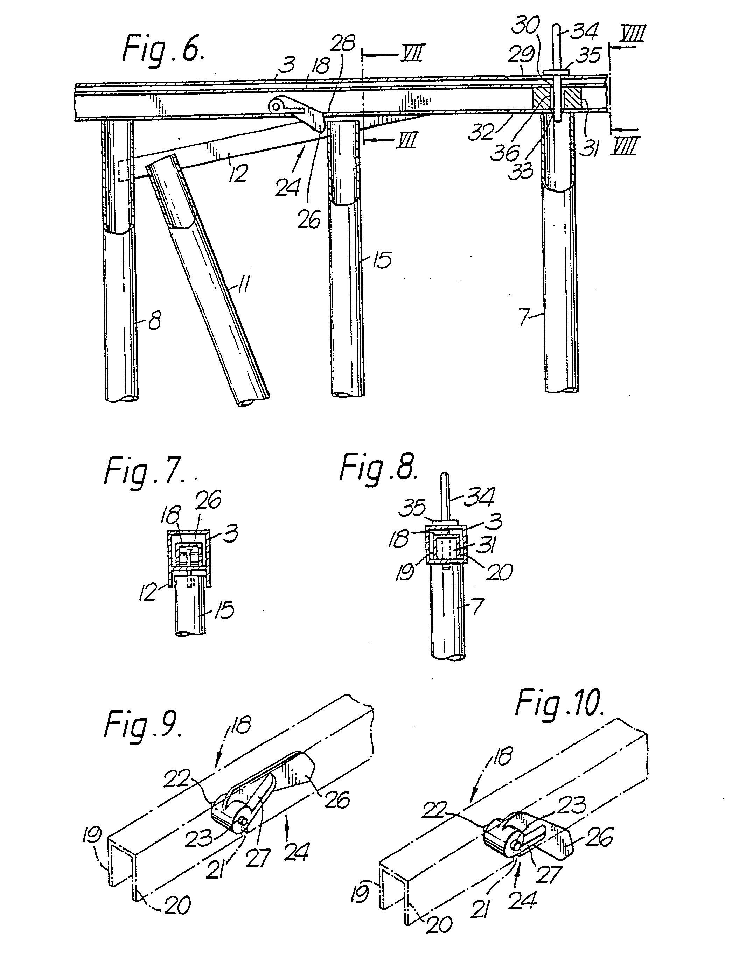

Such as shown in figs. 9 and 10, the locking pawls 24 are provided with a cylindrical part 25, that carries the stub shafts 22 and 23, whereas in the middle of the cylindrical part 25 the plate shaped pawl wing 26 is fastened. On both sides of the pawl wing 26 and on the cylindrical body 25 an abutment plate is fastened, of which only the abutment plate 27 is visible.

The profile girder 3 is provided at the lower side with a number of passage slots 28, through which the pawl wing 26 can project into the locking engagement with the upper side of the pivoting spike 15, such as shown in fig. 6. Then the abutment plates 27 on both sides of the slot 28 rest on the upper side of the inner side of the horizontal lower leg of the profile girder 3.

In the operating rod 18 fence element 2 one elongated slot 29 in the upper leg of the horizontal upper profile girder 3 is arranged, below which slot 29 the operating rod 18 is provided with a bore 30. In the operating rod 18 also a filling block 31 is fastened having a bore 36 with the same diameter as the bore 30 in the operating rod 18 and is aligned with the latter. Then the lower leg of the horizontal profile girder 3 is provided with at least two bores 32 and 33 of the same size as the foregoing bores 30, 36, These former bores 32, 33 of the same size have a mutual distance which is equal to the stroke distance S of the operating rod 18. In the elongated slot 29 and in the bores 30, and 32 or 33 an operating hand grip 34 is placed, which is provided with an abutment collar 35 which rests on the outside of the upper leg of the horizontal upper profile girder 3. By pulling the rod shaped operating hand grip 34 out of the bore 33, moving this hand grip over the stroke distance S to the left in figs. 3 and 6 and placing this hand grip 34 in the bore 32 has as a consequence, that the operating rod 18 is displaced in a horizontal direction to the left side. During this displacement the cam wing 26 turns upwardly counter clockwise, so that the upper end of the pivoting spike 15 is unlocked and this spike can move from the position according to fig. 6 to that of fig. 3. Although in the shown embodiment the locking pawls rotate clockwise by gravity to the locking position, it will be clear, that also springs or other biasing elements can be applied, with which the locking pawls 24 can be moved between the unlocked and the locked position.

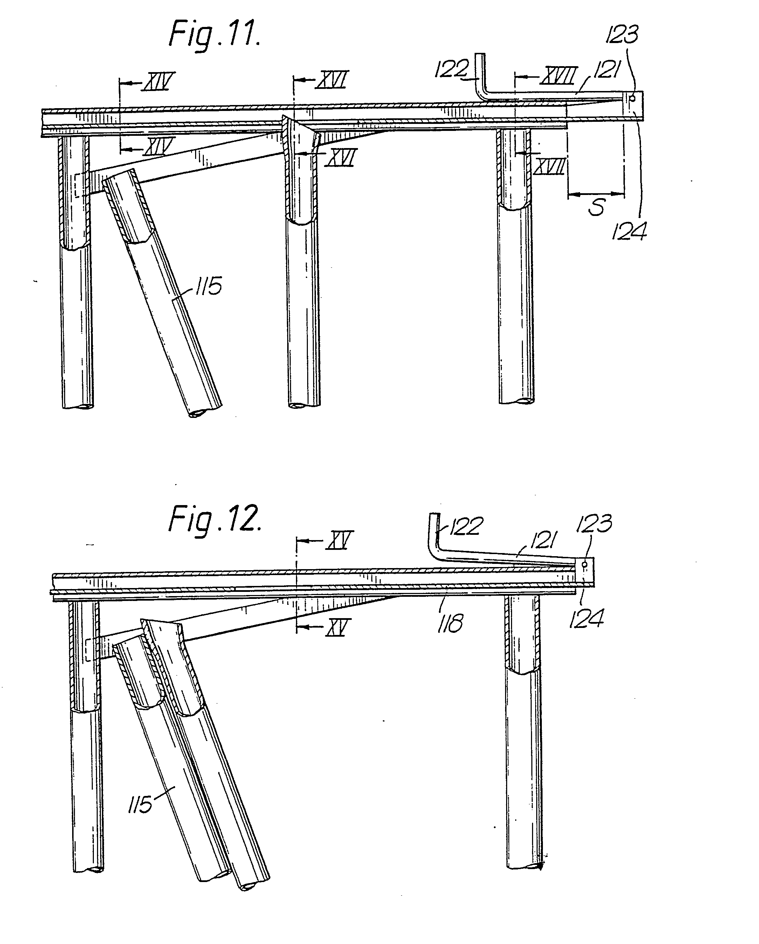

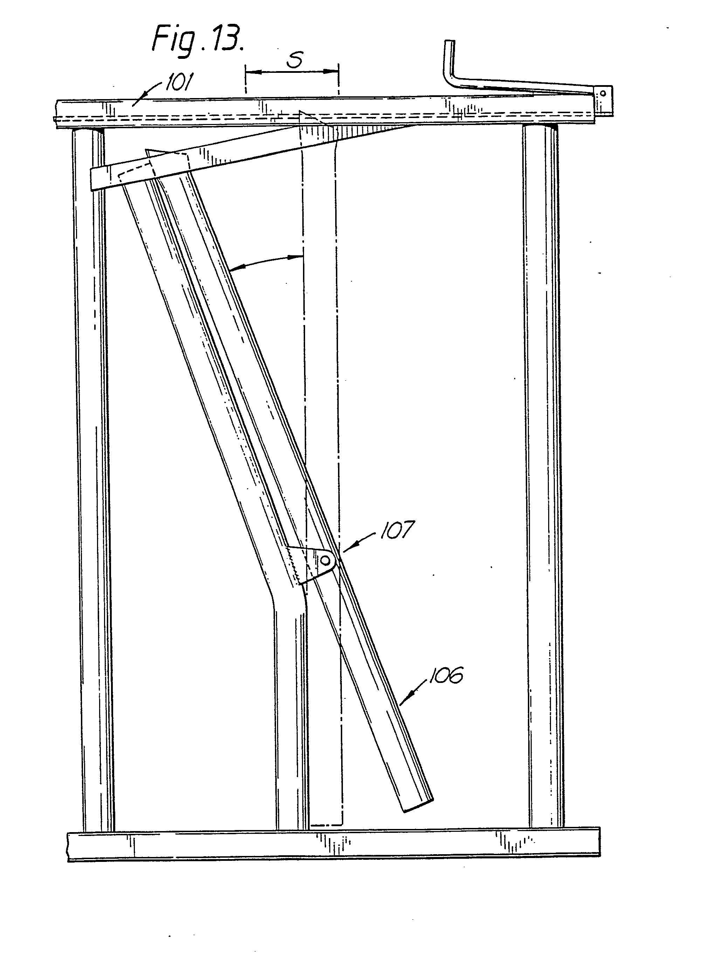

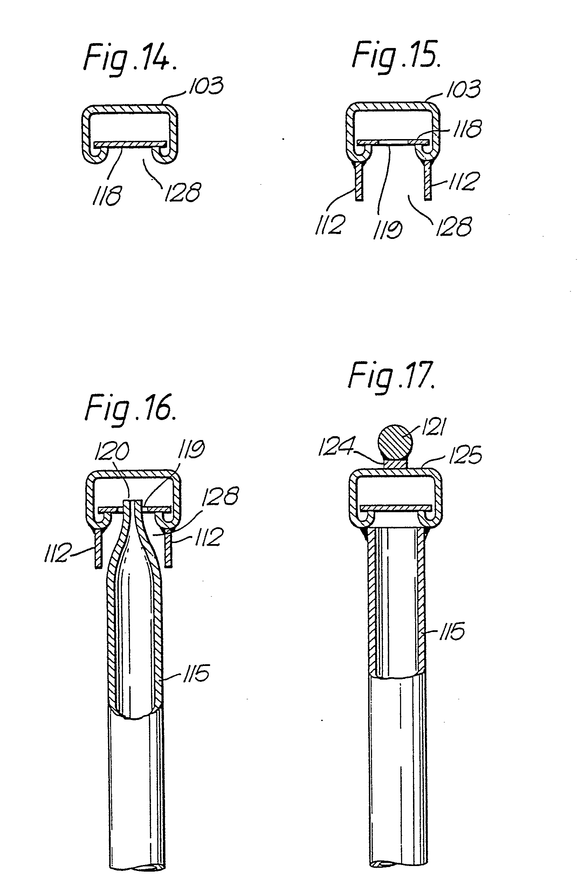

In figs. 11 through 17 the details are shown of the locking device according the second main preferential embodiment of the invention. In the upper, horizontal profile girder 103, which is substantially channel shaped in cross section, for

the locking mechanism an operating rod 118 is arranged which has a strip shaped cross section. This operating rod 118 rests with the lower side of the longitudinal outer edged on the substantially horizontal lying edges of the legs of the channel profile 103, that have been bent over substantially 180° inwardly, and is slidable over the edges. This flat operating rod 118 is provided with regular intervals with preferentially longitudinal locking slots 119, in such a way, that per feeding place at least one slot 119 is present. In the locking or catching positon of the feeding fence the preferentially somewhat flattened end 120 of the pivoting spike 115 can project into this slot 119 through the opening 128 at the lower side of the channel section. The locking takes place by moving the operating rod 118, for instance by means of the external operating element 121, over a distance in the drawing to the right, by means of which the left end of the slot 119 is brought into abutment against the end of the pivoting tube spike 115, that is flattened into the longitudinal direction of the fence and extends into the slot. Preferentially this flattened end is also bevelled in a transverse direction, in such a way that a sharp point is formed which is locked inside the slot 119 of the flat operating rod 118.

An operating element 121 with a handle 122 is fastened to the flat operating rod 118, in which the operating element 121 is fastened with a pivoting connection 123 to a bracket 124 projecting above the horizontal web 125 of the channel section 103, which bracket 124 is in its turn fastened on the flat operating rod 118. With the operating element 121 the operating rod 118 can be moved into and out of the locking position, in which on the opposing end of the operating rod a spring device. can be arranged in order to have the unlocking take place under the influence of the force of the tensioned spring.

The movable operating rod is preferentially relatively elastically resilient in a transverse direction in order to allow local bends in the area of the locking.

## Claims

1. Feeding fence for cattle stables, comprising at least one horizontal profile girder (3, 103) and a number of passage openings each adapted to allow the head of an animal using said opening to pass through said fence, each passage opening comprising a catching apparatus which is operated by the cattle, each catching apparatus comprising at least one bar (15, 115) pivoting on a fixed part of the fence and being movable parallel to the plane of the fence to a catching position behind the head of the animal, said bar being lockable in the catching position by a locking element (24, 119) common unlocking means associated with each locking element being mounted to said horizontal girder and comprising an operating rod (18, 118) extending along the horizontal girder and being guided movable relative thereto between a rest position and an activated position in which the locking element is moved into a non-operative position, characterized in that the horizontal profile girder (3, 103) is a hollow profile girder substantially closed circumferentially, at least at the sides facing away from the pivoting bars (15, 115), that the locking element (24, 119) and the operating rod (18, 118) are mounted inside the horizontal profile girder, said girder having in the area of each locking element, at the side facing the pivoting bar in engagement opening (28, 128) through which the locking element and the bar can engage.

2. Feeding fence according to claim 1, characterized in that the horizontal profile girder has a U- or C-shaped cross-section and in that the engagement opening is formed by part of the opening (28, 128), extending lengthwise of the girder.

3. Feeding fence according to claim 1 or 2, characterized in that an engaging part (26) of the locking element (24), in its operative position extends through the opening (28) in the path of movement of the pivoting bar (15).

4. Feeding fence according to claim 3, characterized in that the movable operating rod (18) is provided in the form of a channel section, open toward the engagement opening (28), slidably mounted within the horizontal profile girder (3) and having locking pawls (24) pivotally mounted between the flanges (19, 20) thereof.

5. Feeding fence according to claim 4, characterized in that the pawls (24) each have on both sides protruding stub shafts (22, 23) which can pivot in recesses (21) in the flanges (19, 20) of the channel section (18).

6. Feeding fence according to claim 4 or 5, characterized in that the pawls (24) each have at least on one side of the engaging part in the form of a pawl wing (26) an abutment (27) which can contact the inside of the profile girder (3) and limit the protruding of the pawl wing (26).

7. Feeding fence according to claims 3—6, characterized in that by moving the movable operating rod (18) over a stroke distance (S) the pawls (24) are retracted inside the profiled girder (3).

8. Feeding fence according to claim 1 or 2, characterized in that the locking element (119) lies fully within the horizontal profile girder (103) and in that the end (120) of the pivoting bar (115) cooperating with the locking element (119), in the locked position extends through the engagement opening (128) into the girder (103).

9. Feeding fence according to claim 8, characterized in that the movable operating rod is provided in the form of a flat strip (118) lying with its broad side horizontal and being slidably mounted in the girder (103), the rod having slot like apertures (119) in which the ends (120) of the pivoting bars engage when locked.

10. Feeding fence according to claim 8 or 9, characterized in that the end of each pivoting bar (115) extending into the horizontal profile girder (103) is a flattened end (120) extending with its plane in or parallel to the plane of the feeding fence.

11. Feeding fence according to claim 9 or 10, characterized in that the strip shaped operating rod (115) is relatively elastically resilient in a transverse direction in order to allow local bends.

12. Feeding fence according to claims 9—11, characterized in that the flanges of the channel section (103) that are directed to the pivoting bar (115) are inwardly bent over 180°, the horizontal, free edges of these flanges forming a support for the operating rod (118).

13. Feeding fence according to one of the preceding claims, characterized in that the profile girder (3) is provided with an elongated slot (29) for the passage of an operating hand grip (34) connected with the operating rod (18), with which operating hand grip (34) the operating rod (18) can be moved back and forth over at least a stroke distance (S) inside the profile girder (3).

14. Feeding fence according to claim 13, characterized in that the operating hand grip (34) is a rod provided with an abutment collar (35), said rod fitting into a correspondingly formed bore (30) in the operating rod (18).

15. Feeding fence according to claim 14, characterized in that on the operating rod (18) a filling block (31) is arranged, having a bore (36) of the same diameter as the bore (30) in the operating rod (18) and being aligned therewith, whereas the profile girder (3) is provided at the lower side with at least two bores (32, 33) of the same size, which are spaced at the stroke distance (S), so that by means of the operating hand grip (34) the operating rod (18) can be locked in the end positions of the stroke.

16. Feeding fence according to claim 15, characterized in that the operating rod (18, 118) is arranged in a substantially horizontal profile girder (3, 103) arranged at the upper side of the fence.

**Patentansprüche**

1. Fütterzaun für Viehställe, bestehend aus wenigstens einem horizontalen Profilträger (3, 103) und einer Anzahl Durchlaßöffnungen, die jeweils ein Durchstrecken des Kopfes eines Tieres durch den Zaun zulassen, wobei jede Durchlaßöffnung eine vom Vieh betätigte Fangvorrichtung aufweist, welche wenigstens einen Stab oder Dorn (15, 115) aufweist, der um einen festen Teil des Zaunes schwenkbar und parallel zur Zaunebene in eine Fangposition hinter dem Kopf des Tieres bewegbar und in der Fangposition durch eine Sperre (24, 119) festlegbar ist und wobei eine gemeinsame, jeder Sperre zugeordnete Löseeinrichtung am horizontalen Profilträger befestigt ist und eine Betätigungsstange (18, 118) aufweist, die sich entlang dem horizontalen Träger erstreckt und relativ zu diesem verschiebbar geführt ist zwischen einer Ruhestellung und einer aktiven Stellung, in der die Sperre in eine nicht im Eingriff befindliche Position bewegt ist, dadurch gekennzeichnet, daß der horizontale Profilträger (3, 103) ein Holprofilträger mit einem mindestens an den von den Schwenkstäben (15, 115) abgewandten Seiten geschlossenem Umfang ist, daß die Sperre (24, 119) und die Betätigungsstange (18, 118) innerhalb des horizontalen Profilträgers montiert sind, und der Träger im Bereich jeder Sperre an der dem Schwenkstab zugewandten Seite eine Eingriffsöffnung (28, 128) aufweist, durch die die Sperre und der Stab in Eingriff gelangen können.

2. Fütterzaun nach Anspruch 1, dadurch gekennzeichnet, daß der horizontale Profilträger einen U- oder C-förmigen Querschnitt aufweist, und daß die Eingriffsöffnung durch einen Teil der in Längsrichtung des Trägers verlaufenden Öffnung (28, 128) gebildet wird.

3. Fütterzaun nach Anspruch 1 oder 2, dadurch gekennzeichnet, daß ein Eingriffsteil (26) der Sperre (24) in seiner im Eingriff befindlichen Stellung durch die Öffnung (28) in die Schwenkbahn des Schwenkstabes (15) ragt.

4. Fütterzaun nach Anspruch 3, dadurch gekennzeichnet, daß die bewgbare Betätigungsstange (18) in Form eines U-Profils ausgebildet ist, das in Richtung auf die Eingriffsöffnung (28) offen, im horizontalen Profilträger (3) verschiebbar aufgenommen ist und mit zwischen seinen Schenkeln (19, 20) schwenkbar gelagerten Sperrklauen (24) versehen ist.

5. Fütterzaun nach Anspruch 4, dadurch gekennzeichnet, daß die Klauen (24) jeweils beidseitig vorstehende Wellenzapfen (22, 23) aufweisen, die in Aussparungen (21) in den Schenkeln (19, 20) des U-Profils (18) drehen können.

6. Fütterzaun nach Anspruch 4 oder 5, dadurch gekennzeichnet, daß die Klauen (24) jeweils an wenigstens einer Seite des Eingriffsteils in Form einer Rastklinke (26) einen Anschlag (27) aufweisen, der die Innenseite des Profilträgers (3) berühren kann und das Vorstehen der Rastklinke (26) begrenzt.

7. Fütterzaun nach Anspruch 3 bis 4, dadurch gekennzeichnet, daß durch Verschieben der bewgbaren Betätigungsstange (18) über einen Hubabstand (S) die Klauen (24) in den Profilträger (3) eingezogen werden.

8. Fütterzaun nach Anspruch 1 order 2, dadurch gekennzeichnet, daß die Sperre (119) ganz innerhalb des horizontalen Profilträgers (103) liegt und das Ende (120) des Schwenkstabes (115) mit der Sperre (119) zusammenwirkt, und in der Sperrstellung durch die Eingriffsöffnung (128) im Träger (103) ragt.

9. Fütterzaun nach Anspruch 8, dadurch gekennzeichnet, daß die bewegbare Betätigungsstange in Form eines flachen Streifens (118) ausgebildet ist, der mit seiner Breitseite horizontal liegt und im Träger (103) verschiebbar gelagert ist, wobei die Stange schlitzartige Öffnungen (119) aufweist, in die die Enden (120) der Schwenkstäbe eingreifen, wenn sie gesperrt sind.

10. Fütterzaun nach Anspruch 8 oder 9, dadurch gekennzeichnet, daß das Ende (120) jedes in den horizontalen Profilträger (103) ragenden Schwenkstabes (115) abgeflacht ist und mit seiner Ebene in oder parallel zur Ebene des Fütterzaunes liegt.

11. Fütterzaun nach Anspruch 9 oder 10, dadurch gekennzeichnet, daß die streifenförmige Betätigungsstange (115) in Querrichtung relativ elastisch ist, um örtliche Biegungen zu ermöglichen.

12. Fütterzaun nach Anspruch 9 bis 11, dadurch gekennzeichnet, daß die den Schwenkstäben (115) zugewandten Schenkel des U-Profils (103) nach innen um 180° gebogen sind, wobei die horizontalen, freien Kanten dieser Schenkel eine Aufnahme für die Betätigungsstange (118) bilden.

13. Fütterzaun nach jedem der vorstehenden Ansprüche, dadurch gekennzeichnet, daß der Profilträger (3) mit einem langgestreckten Schlitz (29) für das Durchführen eines mit der Betätigungsstange (18) verbundenen Betätigungshandgriffes (34) versehen ist, mit dem die Betätigungsstange (18) über wenigstens einen Hubabstand (S) in dem Profilträger (3) hin- und herbewegt werden kann.

14. Fütterzaun nach Anspruch 13, dadurch gekennzeichnet, daß der Betätigungshandgriff (34) ein mit einem Anschlagsring (35) versehener Stift ist, der in die entsprechend ausgebildete Bohrung (30) in der Betätigungsstange (18) paßt.

15. Fütterzaun nach Anspruch 14, dadurch gekennzeichnet, daß auf der Betätigungsstange (18) ein Füllblock (31) angeordnet ist, der eine Bohrung (36) mit dem gleichen Durchmesser wie die Bohrung (30) in der Betätigungsstange (18) aufweist und mit dieser fluchtet, während der Profilträger (3) an der Unterseite mit wenigstens zwei Bohrungen (32, 33) gleicher Größe versehen ist, die zueinander den Hubabstand (S) aufweisen, so daß mittels des Betätigungshandgriffes (34) die Betätigungsstange (18) in den Endpositionen des Hubes festgelegt werden kann.

16. Fütterzaun nach Anspruch 15, dadurch gekennzeichnet, daß die Betätigungsstange (18, 118) in einem, im wesentlichen horizontalen Profilträger (3) an der Oberseite des Zaunes angeordnet ist.

**Revendications**

1. Cornadis d'affourragement pour étables, comprenant au moins une poutre profilée horizontale (3, 103) et une série d'ouvertures de passage, chacune étant adaptée pour permettre à la tête d'un animal utilisant cette ouverture, de passer à travers ledit cornadis, chaque ouverture de passage comportant un dispositif d'accrochage qui est actionné par l'animal, chaque dispositif d'accrochage comprenant au moins une barre (15, 115) articulée sur une partie fixée du cornadis et pouvant se déplacer parallèlement au plan du cornadis jusqu' à une position d'accrochage derrière la tête de l'animal, ladite barre pouvant être verrouillée dans la position d'accrochage par un organe de verrouillage (24, 119) des moyens de déverrouillage classiques associés à chaque organe de verrouillage étant montés sur la poutre horizontale et comprenant une tige d'actionnement (18, 118) s'étendant le long de la poutre horzontale et étant guidée en mouvement par rapport à celle-ci entre une position de repos et une position actionnée dans laquelle l'organe de verrouillage est déplacé dans une position nonactive caractérisé en ce que la poutre profilée horizontale (3, 103) est une poutre profilée creuse sensiblement fermée circonférentiellement, au moins au niveau des côtés orientés dans une direction opposée aux barres pivotantes (15, 115), et en ce que l'organe de verrouillage (24, 119) et la tige d'actionnement (18, 118) sont montés à l'intérieur de la poutre profilée horizontale, ladite poutre ayant, dans la région de chaque élément de verrouillage, sur le côté orienté en direction de la barre pivotante, une ouverture d'engagement (28, 128) à travers laquelle l'organe de verrouillage et la barre peuvent être engagés.

2. Cornadis d'affourrangement selon la revendication 1, caractérisé en ce que la poutre profilée horizontale a une section transversale en forme de U ou de C, et en ce que l'ouverture d'engagement est formée par une partie de l'ouverture (28, 128) s'étendant suivant la longueur de la poutre.

3. Cornadis d'affourragement selon l'une des revendications 1 ou 2, caractérisé en ce qu'une partie d'engagement (26) de l'organe de verrouillage (24), dans sa position active, s'étend à travers l'ouverture (28) dans la trajectoire du mouvement de la barre pivotante (15).

4. Cornadis d'affourragement selon la revendication 3, caractérisé en ce que la tige d'actionnement mobile (18) est réalisée sous la forme d'une section de canal, ouvert vers l'ouverture d'engagement (28), montée à coulissement à l'intérieur de la poutre profilée horizontale (3) et ayant des cliquets de verrouillage (24) montés à pivotement entre les flancs (19, 20) de cette section de canal.

5. Cornadis d'affourragement selon la revendication 4, caractérisé en ce que les cliquets (24) ont chacun des bouts d'arbre (22, 23) faisant saillie sur leurs deux côtés et qui peuvent pivoter dans des encoches (21) ménagées dans les flancs (19, 20) de la section de canal (18).

6. Cornadis d'affourragement selon l'une quelconque des revendications 4 ou 5, caractérisé en ce que les cliquets (24) ont chacun, au moins sur un côté de la partie d'engagement ayant la forme d'une aile de cliquet (26), une butée (27) et qui peut venir en contact avec l'intérieur de la poutre profilée (3) et limiter la saillie de l'aile de cliquet (26).

7. Cornadis d'affourragement selon les revendications 3 à 6, caractérisé en ce que, au moyen du déplacement de la tige d'actionnement mobile (18) sur une distance de course (S), les cliquets (24) sont escamotés à l'intérieur de la poutre profilée (3).

8. Cornadis d'affourragement selon l'une des revendications 1 ou 2, caractérisé en ce que l'organe de verrouillage (119) est disposé entièrement à l'intérieur de la poutre profilée horizontale (103) et en ce que l'extrémité (120) de la barre pivotante (115) coopérant avec l'organe de verrouillage (119), dans la position verrouillée, s'étend à travers l'ouvertures d'engagement (128) dans la poutre (103).

9. Cornadis d'affourragement selon la revendication 8, caractérisé en ce que la tige d'actionnement mobile est réalisée sous la forme d'une bande plate (118) disposée avec son côté plat horizontal et étant montée à coulissement dans la poutre (103), la tige ayant des orifices (119) en forme de fente, dans lesquels les extrémités (120) des barres pivotantes s'engagent lorsqu'elles sont verrouillées.

10. Cornadis d'affourragement selon l'une des revendications 8 ou 9, caractérisé en ce que l'extrémité de chaque barre pivotante (115) s'étendant dans la poutre profilée horizontale (103), est une extrémité aplatie (120) s'étendant avec son plan, dans le plan ou parallèle au plan du cornadis d'affourragement.

11. Cornadis d'affourragement selon l'une des revendications 9 ou 10, caractérisé en ce que la tige d'actionnement en forme de bande (115) est relativement déformable élastiquement dans une direction transversale de manière à permettre des pliages localisés.

12. Cornadis d'affourragement selon les revendications 9 à 11, caractérisé en ce que les flancs de la section de canal (103) qui sont orientés vers les barres pivotantes (115) sont pliés à 180° vers l'intérieur, les bords libres horizontaux de ces flancs formant un support pour la tige d'actionnement (118).

13. Cornadis d'affourragement selon l'une quelconque des revendications précédentes, caractérisé en ce que la poutre profilée (3) est munie d'une fente allongée (29) destinée au passage d'une manette d'actionnement (34) reliée à la tige d'actionnement (18), manette d'actionnement (34) au moyen de laquelle la tige d'actionnement (18) peut être déplacée vers l'arrière et vers l'avant, sur au moins une distance de course (S) à l'intérieur de la poutre profilée (3).

14. Cornadis d'affourragement selon la revendication 13, caractérisé en ce que la manette d'actionnement (34) est une tige munie d'un collier de butée (35), ladite tige s'ajustant dans un alésage (30) formé de manière correspondante dans la tige d'actionnement (18).

15. Cornadis d'affourragement selon la revendication 14, caractérisé en ce que, sur la tige d'actionnement (18), est agencé un bloc de remplissage (31) ayant un alésage (36) de même diamètre que l'alésage (30) ménagé dans la tige d'actionnement (18) et étant aligné avec ce dernier, et en ce que la poutre profilée (3) est munie à son côté inférieur d'au moins deux alésages (32, 33) de même dimension, qui sont espacés de la course (S), de sorte qu'au moyen de la manette d'actionnement (34) la tige d'actionnement (18) peut être verrouillée dans les positions de fin de course.

16. Cornadis d'affourragement selon la revendication 15, caractérisé en ce que la tige d'actionnement (18, 118) est agencée dans une poutre profilée sensiblement horizontale (3, 103) agencée à la partie supérieure du cornadis.

Fig.1.

Fig.2.

0 063 184

0 063 184

Fig.3.

Fig.4.

Fig.5.

2

Fig.6.

Fig.7.

Fig.8.

Fig.9.

Fig.10.

*Fig.11.*

S

115

122  121  123  124

*Fig.12.*

115  118  122  121  123  124

Fig.13.

Fig.14.

Fig.15.

Fig.16.

Fig.17.